# EUROPÄISCHE PATENTSCHRIFT

(11) **EP 2 170 995 B1**
(45) Veröffentlichungstag und Bekanntmachung des Hinweises auf die Patenterteilung: **29.10.2014**
(21) Anmeldenummer: 08786159.7
(22) Anmeldetag: 16.07.2008
(51) Int. Cl.: C08L 83/04, C08G 77/18, B01F 7/00

(54) **VERFAHREN ZUR HERSTELLUNG VON ORGANYLOXYGRUPPEN AUFWEISENDEN ORGANOSILICIUMVERBINDUNGEN**
PROCESS FOR PREPARING ORGANOSILICON COMPOUNDS CONTAINING ORGANYLOXY GROUPS
PROCÉDÉ DE FABRICATION DE COMPOSÉS ORGANOSILICIUM PRÉSENTANT DES GROUPES ORGANYLOXY

(30) Priorität: 25.07.2007 DE 102007034711
(43) Veröffentlichungstag der Anmeldung: 07.04.2010
(73) Patentinhaber: Wacker Chemie AG, 81737 München (DE)
(72) Erfinder: SCHÖLEY, Peter, 01665 Diera-Zehren (DE); RUHLAND, Bernhard, 84489 Burghausen (DE); SCHEIM, Uwe, 01640 Coswig (DE)
(74) Vertreter: Budczinski, Angelika
(86) Internationale Anmeldenummer: PCT/EP2008/059257
(87) Internationale Veröffentlichungsnummer: WO 2009/013185

(56) Entgegenhaltungen:
- DE-A1- 4 029 481
- DE-A1- 10 146 395
- US-A- 4 528 324
- US-B1- 6 265 598

## Beschreibung

Die vorliegende Erfindung betrifft ein Verfahren zur Herstellung von Organyloxygruppen aufweisenden Organosiliciumverbindungen sowie deren Verwendung in bei Raumtemperatur vernetzenden Massen.

RTV1-Dichtmassen, also unter Ausschluss von Wasser lagerfähige, bei Zutritt von Wasser bei Raumtemperatur zu Elastomeren aushärtende Einkomponenten-Dichtmassen, sind bekannt. Diese werden in großen Mengen in der Bauindustrie als Verfugungs- und Dichtmaterial eingesetzt. Während der Aushärtung entstehen durch Hydrolyse üblicherweise Essigsäure oder Alkohole.

Polymere Organosiliciumverbindungen für RTV1-Dichtmassen, die durch Hydrolyse Essigsäure abspalten, können sehr leicht hergestellt werden. Es genügt ein einfaches Vermischen von langkettigen Organopolysiloxanen, welche Silanolgruppen an den Kettenenden enthalten, und Organosilciumverbindungen, die an Silicium mindestens 2 gebundene Acetoxygruppen aufweisen. Innerhalb weniger Minuten findet das so genannte Endcapping statt. Das heißt, die OH-Gruppen an den Kettenenden der Polymere reagieren mit den Acetoxysilanen.

Die Herstellung von polymeren Organosiliciumverbindungen für RTV1-Dichtmassen, die bei der Hydrolyse Alkohol frei setzten, ist wesentlich aufwändiger. So reagieren Mischungen aus Organosiliciumverbindungen mit OH-Gruppe und Alkoxysilanen auch bei höheren Temperaturen nicht miteinander. Setzt man jedoch Katalysatoren zu, wie Zinn- oder Titanverbindungen, dann reagieren die Komponenten direkt zu dreidimensional vernetzten Produkten. Die Reaktion kann oft besser durch Verwendung von Alkoxysilanen gesteuert werden, wenn diese hydrolysierbare Gruppen aufweisen, die reaktiver als die Alkoxygruppen sind. So beschreibt EP-B-98 369 die Umsetzung von Dihydroxydiorganopolysiloxanen mit Alkoxyoximosilanen und US-A-3 147 047 die Umsetzung mit Alkoxyamidosilanen. Die Herstellung dieser Mischsilane ist jedoch sehr aufwändig. Außerdem ist die Entfernung der entstehenden Hydrolyseprodukte aus der Reaktionsmischung meist nur sehr schwer möglich.

Es wurden jedoch auch Katalysatoren und Katalysatorsysteme gefunden, die sehr schnell zur gewünschten Endcapping-Reaktion führen. Diese sind aber so reaktiv, dass sie zu unerwünschten Polymerumlagerungen führen, wie zum Beispiel die in EP-B-457 693 beschriebenen Hydroxidionen. Oder sie müssen durch nachteiliges Ausfällen aus hochviskosen Lösungen deaktiviert werden, wie Fluorid-Ionen, die in EP-B 678 541 offenbart werden.

Weniger reaktive Katalysatoren erfordern im Allgemeinen sehr lange Reaktionszeiten und zusätzlich hohe Temperaturen. So werden in US-A-5 055 502 Zinkkomplexe, wie Zinkdiacetylacetonat, als Katalysatoren beansprucht. Die Endcapping-Reaktionen erfolgen über 1 Stunde bei 80°C unter Rühren des Reaktionsgemisches. EP-B-304 701 B1 lehrt die Verwendung von sauren Aminsalzen als Katalysatoren. Die Endcapping-Reaktionen erfolgen über 1 bis 3 Stunden bei 70 bis 100°C unter Rühren des Reaktionsgemisches.

US-A-2005/0234208 beschreibt die Umsetzung von linearen, Hydroxyl-Endgruppen aufweisenden Polydimethylsiloxanen mit sogenannten α-Silanen, wie zum Beispiel N-(Cyclohexylaminomethyl)-Triethoxysilan. Die Reaktion erfolgt nach dem Mischen von Polydimethylsiloxanen mit. OH-Endgruppen und α-Silanen über 15 bis 60 Minuten bei Raumtemperatur mit einem Planetenmischsystem, wobei auch Butyl-Lithium als Katalysator zugegeben wird.

US6265598 offenbart ein Verfahren zur Herstellung von Methoxygruppen aufweisenden Organosiloxanen durch Umsetzung eines Silanolgruppe aufweisenden Organosiloxans mit einem Organyltrimethoxysilan.

DE10146395 offenbart ein Verfahren zur Herstellung von Organyloxygruppen aufweisenden Organosiloxanen durch Umsetzung eines Silanolgruppe aufweisenden Organosiloxans mit Acetoxysilanen.

Gegenstand der Erfindung ist ein Verfahren zur Herstellung von Organyloxygruppen aufweisenden Organosiliciumverbindungen durch Umsetzung von mindestens eine Silanolgruppe aufweisender Organosiliciumverbindung (A) mit mindestens zwei Organyloxygruppen enthaltender Organosiliciumverbindung (B), dadurch gekennzeichnet, dass Komponente (A), Komponente (B) sowie ggf. weitere Komponenten (C) miteinander mechanisch vermischt werden, wobei der Leistungseintrag 1,0 bis 100 kW pro kg Mischung aus (A), (B) und ggf . (C) beträgt, und durch Scheren erfolgt, mit der Maßgabe, daß der Mischraum des Mischaggregats vollständig mit Mischung gefüllt ist.

Bei der erfindungsgemäß eingesetzten Silanolgruppen aufweisenden Organosiliciumverbindung (A) handelt es sich bevorzugt um solche enthaltend Einheiten der Formel

Rₐ(OH)_{b}SiO_{(4-a-b)/2} (I),

wobei
R gleiche oder verschiedene SiC-gebundene, gegebenenfalls substituierte Kohlenwasserstoffreste bedeutet,
a 0, 1, 2 oder 3, bevorzugt 1 oder 2, ist und
b 0, 1 oder 2, bevorzugt 0 oder 1, ist,
mit der Maßgabe, dass die Summe aus a+b≤4 ist und pro Molekül mindestens eine Einheit der Formel (I) mit b verschieden 0 anwesend ist.

Bei den erfindungsgemäß eingesetzten Organosiliciumverbindungen (A) kann es sich sowohl um Silane handeln, d.h. Verbindungen der Formel (I) mit a+b=4, als auch um Siloxane, d.h. Verbindungen enthaltend Einheiten der Formel (I) mit a+b≤3. Vorzugsweise handelt es sich bei den erfindungsgemäß eingesetzten Organosi-liciumverbindungen um Organopolysiloxane, insbesondere um solche, die aus Einheiten der Formel (I) bestehen.

Im Rahmen der vorliegenden Erfindung sollen von dem Begriff Organopolysiloxane sowohl polymere, oligomere wie auch dimere Siloxane mitumfasst werden.

Beispiele für R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest.

Beispiele für substituierte Reste R sind Halogenalkylreste, wie der 3,3,3-Trifluor-n-propylrest, der 2,2,2,2',2',2.'-Hexafluorisopropylrest, der Heptafluorisopropylrest und Halogenarylreste, wie der o-, m- und p-Chlorphenylrest; sowie γ-funktionalisierte Propylreste, wie der 3-Aminopropylrest, 3-(2-Aminoethyl)aminopropylrest, 3-Glycidoxypropylrest, 3-Mercaptopropylrest und 3-Methacryloxypropylrest oder alpha-funktionalisierte Methylreste, wie der N-Cyclohexylaminomethylrest.

Bevorzugt handelt es sich bei Rest R um Kohlenwasserstoffreste mit 1 bis 18 Kohlenstoffatomen, die gegebenenfalls mit Halogenatomen, Aminogruppen, Ethergruppen, Estergruppen, Epoxygruppen, Mercaptogruppen, Cyanogruppen oder Polyglykolresten substituiert sind, wobei letztere aus Oxyethylen- und/oder Oxypropyleneinheiten aufgebaut sind. Besonders bevorzugt handelt es sich bei Rest R um Kohlenwasserstoffreste mit 1 bis 8 Kohlenstoffatomen, insbesondere um den Methylrest.

Bevorzugt handelt es sich bei Organosiliciumverbindung (A) um ein oder zwei Silanolgruppen aufweisende Organosiliciumverbindungen.

Bei der erfindungsgemäß eingesetzten Organosiliciumverbindung (A) handelt es sich bevorzugt um im Wesentlichen lineare Organopolysiloxane.

Besonders bevorzugt handelt es sich bei Organosiliciumverbindung (A) um lineare Diorganopolysiloxane mit je einer Silanolgruppe an jedem Kettenende.

Die erfindungsgemäß eingesetzten Organosiliciumverbindungen (A) haben eine Viskosität von bevorzugt 5 bis 10⁸ mPas, besonders bevorzugt von 1 000 bis 350 000 mPas, jeweils bei 25°C.

Beispiele für erfindungsgemäß eingesetzte Organosiliciumverbindung (A) sind

HO (Si (CH₃) ₂O) ₂₉₋₂₀₀₀Si (CH₃) ₂ (CH₂) ₃NH₂,

HO (Si (CH₃) ₂O) ₂₉₋₂₀₀₀Si (CH₃) ₂ (OH),

HO (Si (CH₃) ₂O) ₅₋₂₀₀₀Si (CH₃)₃,

HO (Si (CH₃)₂O)₀₋₁₀₀Si (CH₃) ₂ (CH₂) ₃O (CH₂CH (CH₃) O) ₁₀₋₁₀₀₀ (CH₂) ₃ (Si- (CH₃)₂O) _{0- 100}Si (CH₃)₂ (OH),

HO (Si (CH₃) ₂O) ₃₋₅₀₀Si [O (Si (CH₃) ₂O) ₃₋₅₀₀H] ₃ und

HO (Si (CH₃) ₂O) ₃₋₅₀₀Si (CH₃) [O (Si (CH₃) ₂O) ₃₋₅₀₀H]₂,

wobei
HO (Si (CH₃) ₂O) ₃₀₋₂₀₀₀Si (CH₃) ₂ (OH) und
HO (Si (CH₃) ₂O) ₅₋₂₀₀₀Si (CH₃) ;
bevorzugt und HO (Si (CH₃) ₂O) ₃₀₋₂₀₀₀Si (CH₃)₂ (OH)
besonders bevorzugt sind.

Organosiliciumverbindungen (A) sind handelsübliche Produkte bzw. nach in der Chemie gängigen Verfahren herstellbar.

Komponente (A) kann herstellungsbedingt geringe Mengen an Wasser enthalten, bevorzugt bis 500 Gew.-ppm, besonders bevorzugt bis 100 Gew.-ppm.

Bei der erfindungsgemäß eingesetzten Organyloxygruppen aufweisenden Verbindung (B) handelt es sich bevorzugt um solche enthaltend Einheiten der Formel

R¹_{c} (OR²) _{d} (OH) ₑSiO_{(4-c-d-e)}/2 (II)

und/oder deren Teilhydrolysate, wobei
R¹ gleich oder verschieden sein kann und eine für Rest R angegebene Bedeutung hat,
R² gleich oder verschieden sein kann und gegebenenfalls substituierter Kohlenwasserstoffrest, der mit Sauerstoffatomen unterbrochen sein kann, bedeutet,
c 0, 1, 2 oder 3 ist,
d 0, 1, 2, 3 oder 4 ist und
e 0 oder 1, bevorzugt 0, ist,
   mit der Maßgabe, dass die Summe aus c+d+e≤4 ist und pro Molekül mindestens zwei Reste -OR² vorhanden sind.

Bei den erfindungsgemäß eingesetzten Verbindungen (B) kann es sich sowohl um Silane handeln, d.h. Verbindungen der Formel (II) mit c+d+e=4, als auch um Siloxane, d.h. Verbindungen enthaltend Einheiten der Formel (II) mit c+d+e≤3. Vorzugsweise handelt es sich bei den erfindungsgemäß eingesetzten Verbindungen (B) um Silane der Formel (II), wobei d dann bevorzugt 3 oder 4 ist, und/oder deren Teilhydrolysate.

Bei den Teilhydrolysaten kann es.sich um Teilhomohydrolysate handeln wie auch um Teilcohydrolysate.

Beispiele für Reste R¹ sind die für Rest R angegebenen Beispiele.

Bevorzugt handelt es sich bei Rest R¹ um Methyl-, Ethyl-, n-Propyl-, iso-Propyl-, 1-n-Butyl-, 2-n-Butyl-, iso-Butyl-, tert.-Butyl-, Phenyl-, Cyclohexylaminomethyl- und Vinylrest, wobei Cyclohexylaminomethyl-, Methyl- und Vinylreste besonders bevorzugt sind.

Beispiele für Reste R² sind die für Rest R angegebenen Beispiele.

Bevorzugt handelt es.sich bei Rest R² um den Methyl-, Ethyl- und iso-Propylrest, wobei der Ethylrest besonders bevorzugt ist.

Bevorzugt handelt es sich bei Verbindung (B) um mindestens drei Organyloxygruppen aufweisende Organosiliciumverbindungen, besonders bevorzugt um drei Organyloxygruppen aufweisende Organosiliciumverbindungen.

Beispiele für erfindungsgemäß eingesetzte Verbindung (B) sind Methyltrimethoxysilan, Dimethyldimethoxysilan, Tetramethoxysilan, Vinyltrimethoxysilan, Vinyltriethoxysilan, Methylvinyldimethoxysilan, Methyltriethoxysilan, Tetraethoxysilan, Phenyltrimethoxysilan, n-Butyltrimethoxysilan, iso-Butyltrimethoxysilan, tert-Butyltrimethoxysilan, (N-Cyclohexylaminomethyl)-triethoxysilan und (N-Cyclohexylaminomethyl)methyl-diethoxysilan sowie deren Teilhydrolysate, wobei (N-Cyclohexylaminomethyl)-triethoxysilan, (N-Cyclohexylaminomethyl)methyl-diethoxysilan, Tetramethoxysilan, Vinyltrimethoxysilan, und Vinyltriethoxysilan sowie deren Teilhydrolysate bevorzugt sind. Besonders bevorzugt handelt es sich bei Komponente (B) um Vinyltriethoxysilan und (N-Cyclohexylaminomethyl)-triethoxysilan.

Verbindungen (B) sind handelsübliche Produkte bzw. nach in der Chemie gängigen Verfahren herstellbar.

Komponente (B) kann herstellungsbedingt geringe Mengen an Alkohol enthalten, bevorzugt bis 5,0 Gew.-%, besonders bevorzugt bis 1,0 Gew.-%.

Bei dem erfindungsgemäßen Verfahren wird Komponente (B) bevorzugt in Mengen von 0,1 bis 200 Gewichtsteilen, besonders bevorzugt in Mengen von 1 bis 100 Gewichtsteilen, insbesondere in Mengen von 1 bis 20 Gewichtsteilen, jeweils bezogen auf 100 Gewichtsteile Organosiliciumverbindung (A), eingesetzt.

Bevorzugt wird die Komponente (B) im stöchiometrischen Überschuss, bezogen auf die Anzahl der Silanolgruppen in (A), eingesetzt. Besonders bevorzugt ist der stöchiometrische Überschuss von (B), bezogen auf die Anzahl der Silanolgruppen in (A), größer als 1 und ganz besonders bevorzugt größer als 3.

Beispiele für die gegebenenfalls eingesetzten weiteren Komponenten (C), die im erfindungsgemäßen Verfahren eingesetzt werden können, sind Produkte, die die Reaktionsgeschwindigkeit beeinflussen können, wie z.B. Katalysatoren.

Bevorzugt handelt es sich bei Komponente (C) um Katalysatoren.

Beispiele für gegebenenfalls eingesetzte Katalysatoren (C) sind Carbonsäuren, Mineralsäuren, Metallhydroxide, Lewis-Säuren, Amine, Metallchelate und Metallalkoxylate, wie z.B. die des Titans, bzw. Kombinationen daraus.

Bevorzugt handelt es sich bei den gegebenenfalls eingesetzten Katalysatoren (C) um Carbonsäuren, Mineralsäuren, Metallhydroxide, Lewis-Säuren, Amine, Metallchelate und Metallalkoxylate, wie z.B. die des Titans, bzw. Kombinationen daraus.

Falls in dem erfindungsgemäßen Verfahren Katalysatoren (C) eingesetzt werden, handelt es sich um Mengen von bevorzugt 0,0001 bis 5 Gewichtsteilen, jeweils bezogen auf 100 Gewichtsteile Organosiliciumverbindung (A).

Bei dem erfindungsgemäßen Verfahren wird bevorzugt keine Komponente (C) eingesetzt.

Bei dem erfindungsgemäßen Verfahren können die einzelnen Komponenten in beliebiger Reihenfolge und auf bisher bekannte Art und Weise miteinander vermischt werden. Es können aus einigen Komponenten auch Vormischungen hergestellt werden, wie z.B. eine Mischung aus den Komponenten (B) und Komponente (C), die dann mit den anderen Komponenten vermischt werden.

Weiterhin ist es möglich, auch die Komponente (B) oder Komponente (C) zeitlich nacheinander in Teilmengen einzumischen.

Bei den im erfindungsgemäßen Verfahren eingesetzten Komponenten kann es sich jeweils um eine Art einer solchen Komponente wie auch um ein Gemisch aus mindestens zwei Arten einer jeweiligen Komponente handeln.

Bei dem erfindungsgemäßen Verfahren werden in einem beliebig gestalteten Mischraum die Komponenten so miteinander mechanisch vermischt, dass der Leistungseintrag beim Mischvorgang 1,0 bis 100 kW bezogen auf ein Kilogramm der Mischung aus (A), (B) und gegebenenfalls (C), beträgt.

Falls erwünscht, was aber nicht bevorzugt ist, kann die Reaktion auch zu jedem beliebigen Zeitpunkt unterbrochen werden. Bevorzugt wird die Reaktion bis zum vollständigen Abreagieren der Silanolgruppen durchgeführt.

Das erfindungsgemäße Verfahren wird bevorzugt ohne zusätzliches Heizen oder Kühlen bei Umgebungstemperaturen bzw. den Temperaturen, die sich beim Mischen der einzelnen Komponenten ergeben, durchgeführt. Es handelt sich dabei bevorzugt um Temperaturen von 10 bis 150°C, besonders bevorzugt 15 bis 100°C.

Der Leistungseintrag führt in der Regel zu einer Erwärmung der Mischung. Diese Erwärmung beträgt bevorzugt mehr als 1°C, besonders bevorzugt mehr als 2°C und ganz besonders bevorzugt 5 bis 100°C.

Das erfindungsgemäße Verfahren kann kontinuierlich oder diskontinuierlich durchgeführt werden, bevorzugt wird es kontinuierlich durchgeführt.

Das erfindungsgemäße Verfahren wird bevorzugt beim Druck der umgebenden Atmosphäre, also 900 bis 1100 hPa, durchgeführt bzw. bei Drücken, die sich durch die Verwendung von Mischsystemen ergeben. So wird besonders bevorzugt bei kontinuierlicher Arbeitsweise bei Überdruck gearbeitet, wie z.B. zwischen 1100 und 40000 hPa Absolutdruck. Diese Drücke ergeben sich im Allgemeinen bei geschlossenen Systemen durch den Druck beim Fördern und durch den Dampfdruck der eingesetzten Materialien bei erhöhten Temperaturen.

Das erfindungsgemäße Verfahren wird bevorzugt unter Ausschluss von Feuchtigkeit durchgeführt, wie in getrockneter Luft oder in totraumfreien Mischaggregaten.

Bei dem erfindungsgemäßen Verfahren erfolgt der Leistungseintrag in die Mischung durch Scheren.

Bei dem erfindungsgemäßen Verfahren erfolgt der Leistungseintrag bevorzugt durch eine starke Scherung der Mischung, wobei unter Scherung eine Verschiebung von Flüssigkeitsschichten der Mischung gegeneinander verstanden wird.

Bei dem erfindungsgemäßen Verfahren ist der Mischraum des Mischaggregates vollständig mit Mischung gefüllt, so dass keine Toträume vorhanden sind.

Eine starke Scherwirkung wird bevorzugt dadurch erreicht, dass sich drehende Mischorgane mit hohen Umlaufgeschwindigkeiten verwendet werden und/oder dass sich drehende Mischorgane so angeordnet sind, dass sie untereinander oder zur Wandung oder zu anderen Mischelementen hin sehr enge Scherspalte aufweisen.

Der erfindungsgemäße Leistungseintrag kann durch beliebige und an sich bekannte Weise realisiert werden.

In einer erfindungsgemäßen Ausführungsform, die aber nicht bevorzugt ist, wird das Rühren der Mischung in einem Mischer mit schnell drehenden Mischorganen, wie z.B. Dissolvermischer, durchgeführt. Die Dissolver haben Umlaufgeschwindigkeiten von bevorzugt mehr als 10 m/s, besonders bevorzugt von mehr als 20 m/s und insbesondere von mehr als 30 m/s. Dabei können die Mischelemente selbst beliebige Formen aufweisen, bevorzugt sind z.B. scheibenförmige Elemente mit nach unten und/oder nach oben gebogenen Zacken oder sogenannte Butterfly-Mischelemente. Bei diesen Mischern kann es sich um die gleichen handeln, die üblicherweise zur diskontinuierlichen Dispergierung von Feststoffen in Flüssigkeiten genutzt werden. Diese erfindungsgemäße Ausführungsform ist insbesondere für kleine Produktmengen geeignet.

Bei einer bevorzugten Ausführungsform des erfindungsgemäßen Verfahrens werden Mischer angewendet, bei denen die äußere Gehäusewandung rotiert und gleichzeitig eine Drehbewegung des Mischbehälters nach dem Planetensystem stattfindet. Zu einer Scherung der Mischung kommt es durch die sich schnell bewegende äußere Begrenzung des Mischraumes und der Mischung im Inneren.

Bei einer besonders bevorzugten Ausführungsform des erfindungsgemäßen Verfahrens wird die kinetische Energie der Mischung in Form von Strömungsenergie mit hohen Turbulenzen durch Verwendung eines Rotor/Stator-Mischsystems genutzt. Hier erfolgt eine starke Scherung der Mischung zwischen axialem Produkteintritt und radialem Produktaustritt in der Scherzone zwischen Rotor und Stator. Der Durchmesser des Rotors beträgt bevorzugt mehr als 10 cm, besonders bevorzugt 15 bis 200 cm. Bevorzugt sind auf dem Rotor Förderelemente, wie zum Beispiel evolutenförmige Förderelemente, angeordnet. Rotor und Stator können beliebig viele Zähne und Schlitze aufweisen. Möglich ist auch die Anordnung mehrerer Rotor/Stator-Paare hintereinander. Zusätzlich zu dem im Rotor/Stator-System erzeugten Förderstrom können insbesondere bei hochviskosen Mischungen vorher angeordnete pulsationsfreie Förderpumpen den Förderstrom verstärken. Geeignete Rotor/Stator-Mischsysteme sind beispielsweise Mischturbinen, die bei einer elektrischen Leistungsaufnahme von 30 kW eine Mischungsmenge von unter 10 Kilogramm im Mischraum aufweisen.

Bei einer weiteren bevorzugten Ausführungsform des erfindungsgemäßen Verfahrens werden Aggregate verwendet, wie sie für Förderprozesse eingesetzt werden. So ist es möglich, dass beispielsweise bei Zahnradpumpen das Rückströmungsverhältnis gezielt so eingestellt wird, dass die erfindungsgemäße starke mechanische Beanspruchung der Mischung erzielt wird. Der Vorteil solcher Aggregate wird insbesondere darin gesehen, dass die Mischung eine starke Scherung und damit starke Mischeffekte besonders wegen eines fehlenden Totraumes erfährt.

Bei einer weiteren bevorzugten Ausführungsform des erfindungsgemäßen Verfahrens werden dynamische Mischer verwendet, also Mischer mit einer axial im Mischraum angeordneten Mischwelle, die axial vom Mischgut durchströmt werden. Solche Mischer weisen auch den Vorteil auf, dass die Stärke der mechanischen Beanspruchung der Mischungen über die Drehzahl der Mischwelle unabhängig vom Durchsatz variiert werden kann, wenn die Mischelemente keine bzw. eine geringe Förderwirkung aufweisen. Die Regelung des Durchsatzes kann dabei durch zusätzliche Fördereinrichtungen, wie Pumpen, erfolgen.

Bei dem erfindungsgemäßen Verfahren kann nach Beendigung der Reaktion die Reaktionsmischung entflüchtigt werden, wobei die Entflüchtigung mittels Vakuum im selben Apparat oder in einem nachgeschalteten Apparat, mit oder ohne Inertgaseinspeisung, bei Raumtemperaturen oder erhöhten Temperaturen durchgeführt wird. Bei den leichtflüchtigen Bestandteilen handelt es sich bevorzugt um Alkohole, wie Methanol oder Ethanol.

Bei dem erfindungsgemäßen Verfahren betragen die Mischzeiten bevorzugt 0,1 bis 3600 Sekunden, besonders bevorzugt 2 bis 300 Sekunden. Dabei ergeben sich die Mischzeiten bei diskontinuierlicher Verfahrensweise direkt aus der Zeitdauer der mechanischen Beanspruchung der Mischung bzw. werden bei kontinuierlicher Verfahrensweise errechnet als durchschnittliche Verweilzeit aus Durchflussmenge und Behälterinhalt.

Nach dem erfindungsgemäßen Verfahren kann eine Vielzahl von Organyloxygruppen aufweisenden Organosiliciumverbindungen hergestellt werden.

Beispiele für die erfindungsgemäß hergestellten Organyloxygruppen aufweisenden Organosiliciumverbindungen sind
(MeO)₂ (Me) SiO (SiMe₂O) ₃₀₋₂₀₀₀SiMe₂ (CH₂) ₃NH₂,
(MeO) ₂(Me) SiO (SiMe₂O) ₃₀₋₂₀₀₀SiMe₂OSi(Me) (OMe) ₂,
(MeO) ₂ (Me) SiO (SiMe₂O) ₃₀₋₂₀₀₀SiMe₂OSi (Me) ₂ (OMe),
(MeO) ₂ (Vi) SiO (SiMe₂O) ₃₀₋₂₀₀₀SiMe₂OSi (Me) (OMe) ₂,
(EtO)₂ (Vi) SiO (SiMe₂O) ₃₀₋₂₀₀₀Si (Me₂OSi (Me) (OMe) ₂,
(MeO) ₂ (Me) SiO (SiMe₂O) ₃₀₋₁₀₀SiMe₂OSi (OMe) ₃,
(EtO)₃SiO (SiMe₂O) ₃₀₋₂₀₀₀SiMe₂OSi (OEt) ₃,
(MeO) ₂ (Me) SiO (SiMe₂O) ₅₋₂₀₀₀SiMe₃,
(MeO) ₂ (Me) SiO (SiMe₂O) ₁₋₁₀₀SiMe₂ (CH₂) ₃O (CH₂CHMeO) ₁₀₋₁₀₀₀ (CH₂) ₃ (SiMe₂O) ₁₋₁₀₀SiMe₂ (OSi (Me) (OMe) ₂)
und (EtO) ₂ (Cyclohexylaminomethyl) SiO (SiMe₂O) ₃₀₋₂₀₀SiMe₂OSi-(Cyclohexylaminomethyl)(OEt)₂, wobei Me gleich Methylrest, Et gleich Ethylrest und Vi gleich Vinylrest bedeutet.

Bei den erfindungsgemäß hergestellten Organosiliciumverbindungen handelt es sich bevorzugt um solche mit 10 bis 10 000, besonders bevorzugt mit 100 bis 2000, Siliciumatomen.

Die erfindungsgemäß hergestellten Organyloxygruppen aufweisenden Organosiliciumverbindungen können für alle Zwecke verwendet werden, für die auch bisher Organyloxygruppen aufweisende Organosiliciumverbindungen verwendet worden sind.

Insbesondere eignen sie sich zur Herstellung von durch Kondensationsreaktion vernetzbaren Massen.

Die zur Herstellung von durch Kondensationsreaktion vernetzbaren Massen außer den erfindungsgemäß hergestellten Organyloxygruppen aufweisenden Organosiliciumverbindungen üblicherweise verwendeten Bestandteile (D) sind solche ausgewählt aus der Gruppe der Vernetzer, bei denen es sich um die gleichen Verbindungen handeln kann, wie bei Komponente (B) beschrieben, Kondensationskatalysatoren, Haftvermittler, Füllstoffe, Weichmacher, Stabilisatoren, Farbstoffe, Fungizide und Rheologieadditive. Die Bestandteile (D) sind in der Literatur bereits vielfach beschrieben. Hierzu sei beispielsweise auf EP-B1-1 397 428 und EP-B1-1 640 416 verwiesen.

Diese Bestandteile (D) können unmittelbar nach der Reaktion der erfindungsgemäß eingesetzten Bestandteile (A), (B) und gegebenenfalls (C) zugegeben werden, so dass die vernetzbaren Massen mit den erfindungsgemäß hergestellten Organyloxygruppen aufweisenden Organosiliciumverbindungen als Basispolymer in einem Reaktionsgefäß hergestellt werden können. Es können die Bestandteile (D) aber auch nach einer Zwischenlagerung der erfindungsgemäß hergestellten Organyloxygruppen aufweisenden Organosiliciumverbindungen von wenigen Minuten bis einigen Monaten zugegeben werden.

Bei dem erfindungsgemäßen Verfahren ist es möglich, aber nicht bevorzugt, dass ein oder mehrere Bestandteile (D), wie zum Beispiel Füllstoffe oder Weichmacher, mit Komponente (A) bereits vor der erfindungsgemäßen Reaktion vermischt werden.

Das erfindungsgemäße Verfahren hat den Vorteil, dass auf einfache Art und Weise mit kurzen Reaktionszeiten Organyloxygruppen aufweisende Organosiliciumverbindungen hergestellt werden können.

Das erfindungsgemäße Verfahren hat den Vorteil, dass Organyloxygruppen aufweisende Organosiliciumverbindungen ohne externes Beheizen des Reaktionsgefäßes hergestellt werden können.

Das erfindungsgemäße Verfahren hat den Vorteil, dass die hergestellten Organyloxygruppen aufweisenden Organosiliciumverbindungen, auch nach eventueller Lagerung, keine Trübung aufweisen und somit optimal für die Herstellung transparenter härtbarer Massen einsetzbar sind.

Das erfindungsgemäße Verfahren hat den Vorteil, dass die erfindungsgemäß hergestellten Organyloxygruppen aufweisenden Organosiliciumverbindungen gleich nach der Herstellung ohne vorhergehende Isolierung oder Nachbearbeitung, wie Neutralisation, Filtration oder Desaktivierung des Katalysators durch hohe Temperaturen, zur Herstellung von vernetzbaren Massen eingesetzt werden können.

Das erfindungsgemäße Verfahren hat ferner den Vorteil, dass es kontinuierlich durchgeführt werden kann.

In den nachfolgenden Beispielen beziehen sich alle Angaben von Teilen, soweit nicht anders angegeben, auf das Gewicht. Sofern nicht anders angegeben, werden die folgenden Beispiele bei einem Druck der umgebenden Atmosphäre, also bei etwa 1000 hPa, und bei Raumtemperatur, also etwa 20°C bzw. einer Temperatur, die sich beim Zusammengeben der Reaktanden bei Raumtemperatur ohne zusätzliche Heizung oder Kühlung einstellt, durchgeführt. Alle in den Beispielen angeführten Viskositätsangaben beziehen sich auf eine Temperatur von 25°C.

Im Folgenden wird die Beurteilung der hergestellten alkoxyterminierten Polydimethylsiloxane auf die weitestgehende Abwesenheit von Silanolgruppen (Si-OH-Gehalt kleiner 30 Gew.-ppm) anhand des sog. Titanat-Schnelltests durchgeführt:
10 g hergestelltes Polymer (z.B. solches, das vor der Reaktion bei einer Viskosität von 78 000 mPa.s 420 Gew.ppm Si-gebundene OH-Gruppen enthalten hat) und Isopropyltitanat (ca. 0,1 g) wurden mit einem Spatel 3 Minuten verrührt. Wenn eine nach oben gezogene Probe in einem dünnen Faden nach unten läuft, ist die Probe weitestgehend silanolfrei. Wenn die nach oben gezogene Probe abreißt, so enthält sie noch mehr als 30 Gew.-ppm Si-gebundene OH-Gruppen.

Der Vorteil dieses Testes liegt vor allem darin, dass er sehr schnell unmittelbar nach der Endcappingreaktion durchgeführt werden kann

### Beispiel 1

Als Mischaggregat wurde ein Mischer (I) verwendet, der einen sich drehenden Mischbehälter aufweist, der auf einer sich ebenfalls drehenden Platte angeordnet ist, wobei keine weiteren Mischelemente im Mischbehälter vorhanden sind. Der Antrieb erfolgt über einen Drehstrommotor. Solche Mischer sind beispielsweise in EP-B-1 293 245 beschriebene.

Im Mischer (I) wurden 50 g eines α,ω-Dihydroxypolydimethylsiloxans mit einer Viskosität von 78 000 mPa·s (gemessen bei 25°C mit einem Rotationsviskosimeter) und 1,5 g Cyclohexylaminomethyltriethoxysilan bei einer Drehzahl des Mischbehälters von 3500 Umdrehungen je Minute für eine Dauer von 60 Sekunden in einem zylinderförmigen PE-Becher miteinander vermischt. Der zylinderförmige und innen glatte Mischbehälter bestand aus Polyethylen, wies ein Volumen von ca. 150 ml auf und war mit einem Schraubdeckel verschlossen. Die drehende Platte wies einen Durchmesser von ca. 18 cm auf.

Der Si-gebundene OH-Gehalt des Polymers betrug vor der Reaktion 420 ppm. Es wurden keine Katalysatoren verwendet. Die Ausgangstemperatur der Komponenten betrug 25°C.

Der Leistungseintrag in das Mischgut wurde mit einem handelsüblichen Messgerät erfasst als Differenz der jeweils gemessenen elektrischen Leistungen des Mischers "leer" drehend, das heißt, es war kein Mischgut im Mischbecher vorhanden, und "voll" drehend, das heißt, es waren 51,5 g Mischgut im PE-Becher vorhanden.

Die ermittelte Leistung des leeren Mischers betrug 178,9 Watt. Die ermittelte Leistung des vollen Mischers lag bei 274,4 Watt. Daraus errechnet sich ein Leistungseintrag von 95,5 Watt. Das Mischgut wurde also mit einer erfindungsgemäßen spezifischen Leistung von 1,85 Kilowatt pro kg Eduktmischung mechanisch beansprucht.

Der unmittelbar nach dem Vermischen durchgeführte Titanattest war negativ, das heißt, die Endcappingreaktion war bereits innerhalb dieser kurzen Reaktionszeit abgeschlossen.

### Beispiel 2

Die in Beispiel 1 beschriebene Verfahrensweise wurde wiederholt mit der Abänderung, dass die beiden Komponenten bei einer Drehzahl des Mischbehälters von 2500 Umdrehungen je Minute miteinander vermischt wurden.

Die ermittelte Leistung des leeren Mischers betrug 151,1 Watt. Die ermittelte Leistung des vollen Mischers lag bei 185,8 Watt. Daraus errechnet sich ein Leistungseintrag von 34,7 Watt. Das Mischgut wurde also mit einer erfindungsgemäßen spezifischen Leistung von 0,67 Kilowatt pro kg Eduktmischung mechanisch beansprucht.

Der unmittelbar nach dem Vermischen durchgeführte Titanattest war negativ, das heißt, die Endcappingreaktion war bereits innerhalb dieser kurzen Reaktionszeit abgeschlossen.

### Vergleichsbeispiel 1

Die in Beispiel 1 beschriebene Verfahrensweise wurde wiederholt mit der Abänderung, dass die beiden Komponenten bei einer Drehzahl des Mischbehälters von 1500 Umdrehungen je Minute miteinander vermischt wurden.

Die ermittelte Leistung des leeren Mischers betrug 128,1 Watt. Die ermittelte Leistung des vollen Mischers lag bei 131,2 Watt. Daraus errechnet sich ein Leistungseintrag von 3,1 Watt. Das Mischgut wurde also mit einer geringen spezifischen Leistung von 0,06 Kilowatt pro kg Eduktmischung mechanisch beansprucht.

Der unmittelbar nach dem Vermischen durchgeführte Titanattest war positiv, das heißt, die Endcappingreaktion war innerhalb dieser kurzen Reaktionszeit noch nicht beendet.

### Vergleichsbeispiel 2

Das in Beispiel 1 verwendete α,ω-Dihydroxypolydimethylsiloxan und das Cyclohexylaminomethyltriethoxysilan wurden getrennt voneinander 4 Stunden auf 60°C temperiert. Nach Zugabe von 1,5 g Cyclohexylaminomethyltriethoxysilan zu 50 g α,ω-Dihydroxypolydimethylsiloxan wurde 60 Sekunden bei 1500 Umdrehungen je Minute gemischt.

Die Endcappingreaktion war nicht beendet, denn der unmittelbar danach durchgeführte Titanattest war positiv.

### Beispiel 3

Die Reaktion des in Beispiel 1 beschriebenen α,ω-Dihydroxypolydimethylsiloxans und Cyclohexylaminomethyltriethoxysilans wurde in einem Labordissolver (Mischer II) beim Druck der umgebenden Atmosphäre durchgeführt.

Dazu wurden 400 g des α,ω-Dihydroxypolydimethylsiloxans mit 12 g Cyclohexylaminomethyltriethoxysilan bei einer Ausgangangstemperatur von 25°C 3 Minuten intensiv miteinander vermischt. Die Mischwelle mit Dissolverzahnkranz, dessen Durchmesser ca. 6,5 cm betrug, wurde auf 5000 Umdrehungen je Minute eingestellt. Der Mischbehälter aus Stahlblech, der einen Durchmesser von ca. 12 cm und eine Höhe von ca. 12 cm aufwies, wurde nicht gekühlt und nicht beheizt.

Die Antriebsleistung des Drehstrommotors betrug bei einer Drehzahl der Mischwelle von 1000 Umdrehungen je Minute nach Herstellerangaben 0,75 Kilowatt. Da eine einfache Kraftübertragung vom Elektromotor über ein Zahnradgetriebe auf die Mischwelle stattfand, kann ein Wirkungsgrad von 0,9 angesetzt werden. Der Wirkungsgrad ist dabei der Quotient aus mechanischem Eintrag von Mischleistung durch die Dissolverscheibe in die Mischung und elektrischer Leistungsaufnahme des Motors. Aus 0,75 Kilowatt Leistungsaufnahme und Wirkungsgrad von 0,9 errechnet sich ein Eintrag von mechanischer Leistung von 0,68 Kilowatt. Daraus ergibt sich eine erfindungsgemäße spezifischen Leistung von 1,65 Kilowatt pro kg Eduktmischung.

Der unmittelbar nach dem Mischprozess durchgeführte Titanattest war negativ, das heißt, die Endcappingreaktion war innerhalb der 3 Minuten Mischzeit abgeschlossen.

### Beispiel 4

Die Reaktion des in Beispiel 1 beschriebenen α,ω-Dihydroxypolydimethylsiloxans mit einer Viskosität von 78 000 mPa·s und Cyclohexylaminomethyltriethoxysilan wurde kontinuierlich in einem Mischer mit Rotor/Stator-Mischsystem durchgeführt, wie er in EP-B-101 46 395 beschrieben ist, die zum Offenbarungsgehalt der vorliegenden Erfindung zu zählen ist (Mischer III).

Die beiden Ausgangsstoffe, deren Temperatur 23°C betrug, wurden im Gewichtsverhältnis 100 : 3 getrennt voneinander und kontinuierlich bei dem umgebenden Druck der Atmosphäre und bei Raumtemperatur über eine Zugabeöffnung von oben im freien Fall in den Mischraum dosiert. Der Mischraum bestand aus einem Gehäuse, in dem sich ein horizontal angeordneter, scheibenförmiger Rotor von 26 cm Durchmesser drehte, der evolutenförmige Mischelemente von 3,0 cm Höhe aufwies. In einer Entfernung von 1 cm vom äußeren Rotorumfang befand sich die Innenseite des still stehenden Stators, der 46 Zähne von jeweils ca. 0,7 cm Breite entlang des Umfanges aufwies. Der Rotor wurde mit 800 Umdrehungen je Minute betrieben. Das Mischgut wurde dabei durch die Fliehkraft nach außen gedrückt, wobei es dann auf den Stator aufprallt, und zwischen Rotor und Stator stark geschert wurde. Etwa 1 cm hinter dem Stator wird das Mischgut in die radial angeordnete Auslassöffnung gedrückt. Eine Absperrvorrichtung kurz nach dem Auslass wurde so weit verschlossen, dass sich nach genauer Regelung der Dosiermengen ein Durchsatz von 1000 kg/h bei einem Druck von ca. 1800 hPa am Auslass einstellte.

Der ca. 5 cm hohe, zylinderförmige Mischraum, ohne die oben angebrachte Zugabeöffnung für die Ausgangsstoffe, war stets vollständig mit ca. 3,0 kg Mischgut gefüllt. Es waren keine Leerräume vorhanden.

Die mittlere Aufenthaltswahrscheinlichkeit des Mischgutes beträgt, bezogen auf den Mischraum, 0,003 Stunden.

Durch das Mischen erwärmte sich das Mischgut auf 33°C. Um 1000 kg Mischgut um 10 Grad zu erwärmen, werden ca. 15 500 kJ benötigt (Spezifische Wärmekapazität von Polydimethylsiloxanen: 1,55 J/g K). Dies entspricht einer Energiemenge von 4,3 Kilowattstunden, welche über eine Stunde von mechanischer Energie in thermische Energie umgewandelt wurde. Damit beträgt der Leistungseintrag 4,3 Kilowatt über eine Stunde und der spezifische Leistungseintrag mindestens 1,43 Kilowatt je Kilogramm Eduktmischung im Mischraum, wenn man die Menge des Mischgutes des gesamten Mischraumes betrachtet. Würde man den Leistungseintrag beispielsweise auf das durch die Mischelemente des Rotors überstrichene Volumen und das Volumen des Stator beziehen, dann wäre der errechnete Leistungseintrag noch wesentlich höher, nämlich 4,3 Kilowatt auf ca. 0,2 Liter, also über 20 Kilowatt je Kilogramm Eduktmischung.

Der sofort nach dem Vermischen durchgeführte Titanattest an Proben, die unmittelbar nach der Absperrvorrichtung entnommen wurden, war negativ, das heißt, die Endcappingreaktion war abgeschlossen.

## Patentansprüche

1. Verfahren zur Herstellung von Organyloxygruppen aufweisenden Organosiliciumverbindungen durch Umsetzung von mindestens eine Silanolgruppe aufweisender Organosiliciumverbindung (A) mit mindestens zwei Organyloxygruppen enthaltender Organosiliciumverbindung (B), **dadurch gekennzeichnet, dass** Komponente (A), Komponente (B) sowie gegebenenfalls weitere Komponenten (C) miteinander mechanisch vermischt werden, wobei der Leistungseintrag 1,0 bis 100 kW pro kg Mischung aus (A), (B) und gegebenenfalls (C) beträgt und durch Scheren erfolgt, mit der Maßgabe, dass der Mischraum des Mischaggregats vollständig mit Mischung gefüllt ist.

2. Verfahren nach Anspruch 1, **dadurch gekennzeichnet,**
**dass** es sich bei den Silanolgruppen aufweisenden Organosiliciumverbindungen (A) um solche enthaltend Einheiten der Formel
Rₐ (OH) _{b}SiO_{(4-a-b)/2} (I)
handelt, wobei
R gleiche oder verschiedene SiC-gebundene,
gegebenenfalls substituierte Kohlenwasserstoffreste bedeutet,
a 0, 1, 2 oder 3 ist und
b 0, 1 oder 2 ist,
mit der Maßgabe, dass die Summe aus a+b≤4 ist und pro Molekül mindestens eine Einheit der Formel (I) mit b verschieden 0 anwesend ist.

3. Verfahren nach Anspruch 1 oder 2, **dadurch gekennzeichnet, dass** es sich bei Verbindung (B) um solche enthaltend Einheiten der Formel
R¹_{c} (OR²) _{d} (OH) ₑSiO_{(4-c-d-e)/2} (II)
und/oder deren Teilhydrolysate handelt, wobei
R¹ gleich oder verschieden sein kann und eine für Rest R angegebene Bedeutung hat,
R² gleich oder verschieden sein kann und gegebenenfalls substituierter Kohlenwasserstoffrest, der mit Sauerstoffatomen unterbrochen sein kann, bedeutet,
c 0, 1, 2 oder 3 ist,
d 0, 1, 2, 3 oder 4 ist und
e 0 oder 1, bevorzugt 0, ist,
mit der Maßgabe, dass die Summe aus c+d+e≤4 ist und pro Molekül mindestens zwei Reste -OR² vorhanden sind.

4. Verfahren nach einem oder mehreren der Ansprüche 1 bis 3, **dadurch gekennzeichnet, dass** Komponente (B) in Mengen von 0,1 bis 200 Gewichtsteilen, bezogen auf 100 Gewichtsteile Organosiliciumverbindung (A), eingesetzt wird.

5. Verfahren nach einem oder mehreren der Ansprüche 1 bis 4, **dadurch gekennzeichnet, dass** es sich bei Komponente (C) um Katalysatoren handelt.

6. Verfahren nach einem oder mehreren der Ansprüche 1 bis 5, **dadurch gekennzeichnet, dass** es kontinuierlich durchgeführt wird.

## Claims

1. Process for preparing organosilicon compounds containing organyloxy groups by reaction of organosilicon compound (A) containing at least one silanol group with organosilicon compound (B) containing at least two organyloxy groups, **characterized in that** component (A), component (B), and, if desired, further components (C) are mixed mechanically with one another, the power input being 1.0 to 100 kW per kg of mixture of (A), (B), and, where used, (C) and being accomplished by shearing, with the proviso that the mixing chamber of the mixing assembly is filled completely with mixture.

2. Process according to Claim 1, **characterized in that** the organosilicon compounds (A) containing silanol groups are compounds comprising units of the formula
Rₐ(OH)_{b}SiO_{(4-a-b)}/2 (I)
where
R denotes identical or different SiC-bonded, optionally substituted hydrocarbon radicals,
a is 0, 1, 2 or 3, and
b is 0, 1 or 2,
with the proviso that the sum of a + b is ≤ 4 and per molecule there is at least one unit of the formula (I) present with b other than 0.

3. Process according to Claim 1 or 2, **characterized in that** compound (B) is a compound comprising units of the formula
R¹_{c}(OR²)_{d}(OH)ₑSiO(_{4-c-d-e)/2} (II)
and/or partial hydrolyzates thereof, where
R¹ may be identical or different and has a definition specified for radical R,
R² may be identical or different and denotes optionally substituted hydrocarbon radical which may be interrupted by oxygen atoms,
c is 0, 1, 2 or 3,
d is 0, 1, 2, 3 or 4, and
e is 0 or 1, preferably 0,
with the proviso that the sum of c + d + e is ≤ 4 and per molecule there are at least two radicals -OR² present.

4. Process according to one or more of Claims 1 to 3, **characterized in that** component (B) is used in amounts of 0.1 to 200 parts by weight, based on 100 parts by weight of organosilicon compound (A).

5. Process according to one or more of Claims 1 to 4, **characterized in that** component (C) comprises catalysts.

6. Process according to one or more of Claims 1 to 5, **characterized in that** it is carried out continuously.

## Revendications

1. Procédé de préparation de composés organosiliciés comprenant des groupes organyloxy, par réaction d'un composé organosilicié (A), comprenant au moins un groupe silanol, avec un composé organosilicié (B) contenant au moins deux groupes organyloxy, **caractérisé en ce que** le composant (A), le composant (B), ainsi qu'éventuellement d'autres composants (C), sont mécaniquement mélangés les uns aux autres, la puissance fournie étant de 1,0 à 100 kW par kg de mélange de (A), de (B) et éventuellement de (C), et étant réalisée par cisaillement, à la condition que le compartiment de mélange de l'équipement mélangeur soit entièrement rempli du mélange.

2. Procédé selon la revendication 1, **caractérisé en ce que**, pour ce qui concerne les composés organosiliciés (A) comprenant des groupes silanol, il s'agit de ceux qui contiennent des unités de formule
Rₐ(OH)_{b}SiO_{(4-a-b)}/2 (I)
dans laquelle
R représente des radicaux hydrocarbonés identiques ou différents, liés à SiC, éventuellement substitués,
a vaut 0, 1, 2 ou 3, et
b vaut 0, 1 ou 2,
du moment que la somme a+b≤4, et qu'une unité de formule (I), avec b différent de 0, est présente par molécule.

3. Procédé selon la revendication 1 ou 2, **caractérisé en ce que**, pour ce qui concerne le composé (B), il s'agit d'un tel composé contenant des unités de formule
R¹_{c} (OR²) _{d} (OH) ₑSiO_{(4-c-c-d-e)/2} (II)
et/ou d'hydrolysats partiels de ce dernier, dans laquelle
les radicaux R¹ peuvent être identiques ou différents et ont chacun les définitions données pour le radical R,
les radicaux R² peuvent être identiques ou différents et représentent chacun un radical hydrocarboné éventuellement substitué, qui peut être interrompu par des atomes d'oxygène,
c vaut 0, 1, 2 ou 3,
d vaut 0, 1, 2, 3 ou 4, et
e vaut 0 ou 1, de préférence 0,
du moment que la somme c+d+e≤4, et qu'au moins deux radicaux -OR² sont présents par molécule.

4. Procédé selon l'une ou plusieurs des revendications 1 à 3, **caractérisé en ce que** le composant (B) est utilisé en des quantités de 0,1 à 200 parties en poids, pour 100 parties en poids du composé organosilicié (A).

5. Procédé selon l'une ou plusieurs des revendications 1 à 4, **caractérisé en ce que**, pour ce qui concerne le composant (C), il s'agit de catalyseurs.

6. Procédé selon l'une ou plusieurs des revendications 1 à 5, **caractérisé en ce qu'**il est mis en oeuvre en continu.
